# EUROPEAN PATENT APPLICATION

(11) **EP 4 538 177 A1**
(43) Date of publication of application: **16.04.2025**
(21) Application number: 24204623.3
(22) Date of filing: 04.10.2024
(51) Int. Cl.: B64D 11/00, B64D 45/00

(54) **BARRIER FOR AN AIRCRAFT**

(30) Priority: 11.10.2023 US 202318484645
(71) Applicant: The Boeing Company, Arlington, VA 22202 (US)
(72) Inventor: NUNES, Daniel Bryan, ARLINGTON, 22202 (US); RHYNARD, Steven Ellis, ARLINGTON, 22202 (US); SMITH, Gregory Station, ARLINGTON, 22202 (US); HAJ-MUSA, Hakeem, ARLINGTON, 22202 (US); TABORA, Justin, ARLINGTON, 22202 (US); ADDIS, Paul, ARLINGTON, 22202 (US)
(74) Representative: Plasseraud IP

(57) **Abstract**

A barrier door system to control movement of persons through an opening within a cabin area of an aircraft. The barrier door system includes a track with an elongated shape with a first end and a second end. A barrier door includes panels that are pivotally connected together and one or more pins that extend outward from a top edge of the barrier door and are configured to engage with the track. The panels are configured to pivot together in a folded configuration at a stowed position, and to pivot outward away from the track in an extended configuration to extend across the opening at the deployed position.

## Description

### TECHNOLOGICAL FIELD

The present disclosure relates generally to the field of aircraft and, more specifically, to a control movement of persons through an opening within a cabin area.

### BACKGROUND

Aircraft have a flight deck that includes flight instruments, instrument panels, and various controls that enable the flight personnel to operate the aircraft. The flight deck is positioned towards the front of the aircraft and is usually a separate compartment away from the cabin area where passengers sit during flight. A flight deck door further separates the flight deck from the cabin area.

The flight deck door is closed and locked during flight. This allows the flight personnel to concentrate on operating the aircraft and prevents entry of unauthorized persons onto the flight deck. However, the flight deck door may be opened during flight for various reasons. One occurrence is when flight personnel use the lavatory which is located in the cabin area of the aircraft. Other occurrences are when food and/or drinks that are prepared in the galley of the cabin area are delivered to the flight personnel on the flight deck, and when flight personnel leave the flight deck during a break.

Opening of the flight deck door could present an opportunity for an unauthorized person to gain entry to the flight deck.

A physically installed system is proposed that would inhibit and/or sufficiently delay a person in the cabin area from reaching the flight deck door when the flight deck door is open. The delay in their movement towards the flight deck would allow the flight deck door to be closed and locked prior to the person reaching the door.

### SUMMARY

In a particular implementation, a barrier door system is provided as per the appended claims 1 to 10.

In another particular implementation, a method of controlling movement of passengers through an opening within a cabin area of an aircraft is provided as per the appended claims 11 to 15.

The features, functions and advantages that have been discussed can be achieved independently in various aspects or may be combined in yet other aspects, further details of which can be seen with reference to the following description and the drawings.

### BRIEF DESCRIPTION OF THE DRAWINGS

Figure 1 is an isometric view of an example aircraft.
Figure 2 is a schematic drawing of an interior of an aircraft that includes an example of a barrier door system.
Figure 3 is a perspective view of an example of a barrier door system positioned in proximity to a flight deck door within an interior of an aircraft.
Figure 4 is a schematic diagram of an example of a barrier door system positioned at an opening within an interior of an aircraft.
Figure 5 is a schematic drawing of an interior of an aircraft that includes an example of a barrier door system.
Figure 6 is a side view of an example of a barrier door in an extended configuration.
Figure 7 is a schematic side view of an example of a pin that extends from a panel of a barrier door and this is engaged in a track.
Figure 8 is a partial isometric view of an example of a pair of pins extending from a top edge of a panel of a barrier door.
Figure 9 is a top view of an example of a barrier door in a folded configuration.
Figures 10A-10E are schematic diagrams illustrating an example of a barrier door being deployed across an opening in an aircraft.
Figure 11 is a flowchart diagram of an example of a method of controlling movement of passengers through an opening within a cabin area of an aircraft.

### DETAILED DESCRIPTION

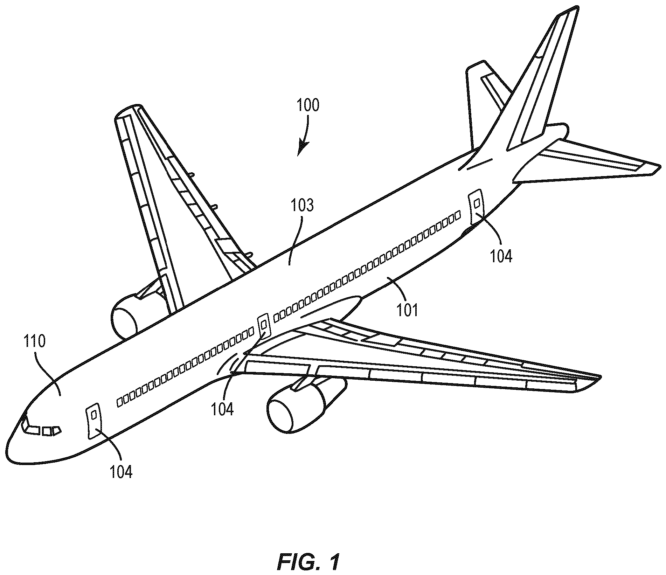

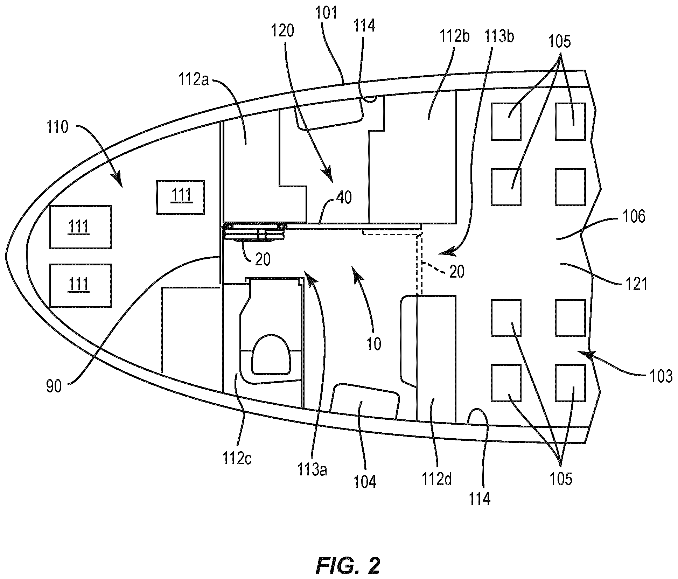

Figures 1 and 2 illustrate an example aircraft 100 configured to transport passengers. The aircraft 100 includes a fuselage 101 with a flight deck 110 positioned at the front and a cabin area 103 positioned rearward. The cabin area 103 is equipped for accommodating the passengers. The size of the flight deck 110 and the cabin area 103 can vary depending upon the aircraft 100. One or more exterior doors 104 provide for passengers and the flight personnel to enter and exit the fuselage 101.

The flight deck 110 includes one or more seats 111 for flight personnel including but not limited to the pilot, co-pilot, and other authorized persons. Various controls and instrument panels (not illustrated) are located for use by the flight personnel to control the aircraft 100.

The cabin area 103 is positioned along the fuselage 101 rearward of the flight deck 110. The cabin area 103 includes a passenger section 121 with seats 105 arranged in rows along one or more aisles 106. In some examples such as a commercial airline, the seats 105 extend throughout the cabin area 103. In other examples in which the aircraft 100 is used for cargo transport, a limited number of seats 105 are positioned in the cabin area 103.

Monuments 112 are mounted to structural members of the aircraft 100 within the fuselage 101. The monuments 112 are shaped and sized for a function with examples including but not limited to galleys, lavatories, walls, and stowage units. In some examples, the monuments 112 are shaped and sized to extend from the floor to the ceiling of the cabin area 103, and between a wall 114 of the fuselage 101 to an aisle 106.

In some examples, the cabin area 103 includes a vestibule 120 positioned between the flight deck 110 and the passenger section 121. In some examples, the vestibule 120 is positioned at one of the exterior doors 104 and includes space to allow for passengers to enter and exit the aircraft 100. Additionally or alternatively, the vestibule 120 provides an area for flight personnel to sit during takeoff and landing, for the flight personnel to prepare food/drinks, and for passengers to access a lavatory. Figure 2 includes the vestibule 120 having a pair of galley monuments 112a, 112b, a lavatory monument 112c, and a stowage monument 112d. In other examples, the cabin area 103 does not include a vestibule with the passenger section 121 including the seats 105 extending directly behind the flight deck 110.

One or more openings 113 are formed within the cabin area 103. In some examples as illustrated in Figure 2, the openings 113 are formed between the monuments 112. The openings 113 form walkways for passengers and flight personnel to move within the cabin area 103. Figure 2 illustrates a layout with a pair of openings - opening 113a formed closer to the flight deck 110 and opening 113b closer to the passenger section 121. Other examples include openings 113 formed between various components, such as monuments 112, walls 114 of the fuselage 101, and seats 105.

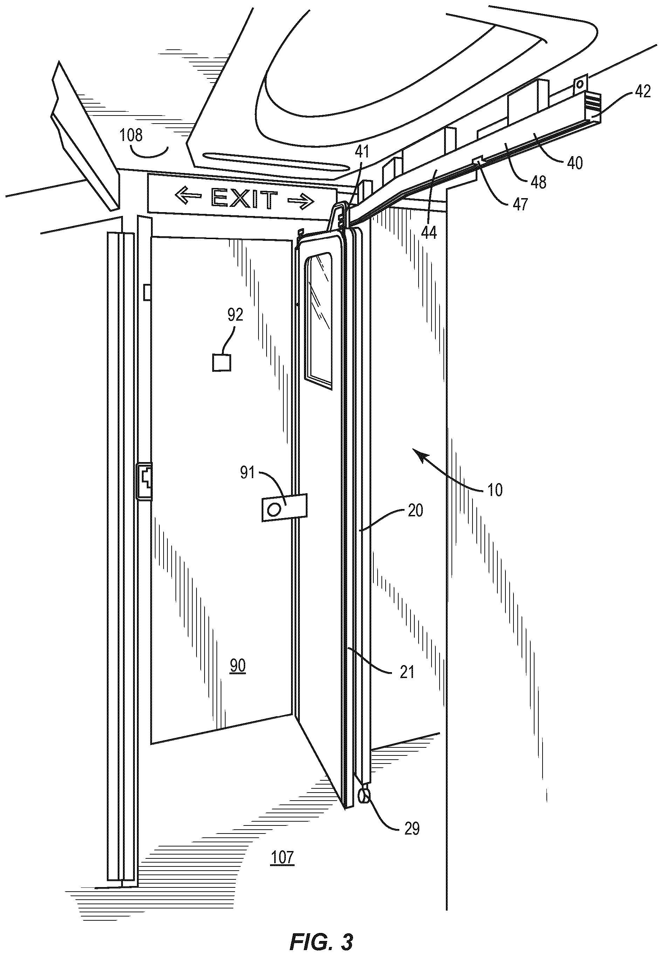

As illustrated in Figures 2 and 3, a flight deck door 90 separates the flight deck 110 from the cabin area 103. In some examples the flight deck door 90 separates the flight deck 110 from the vestibule 120. The flight deck door 90 prevents unauthorized persons from entering the flight deck 110 from the cabin area 103. As illustrated in Figure 3, the flight deck door 90 includes a lock 91 configured to secure the door 90 in the closed position. The lock 91 can include various configurations for unlocking, such as a magnetic card reader and input buttons. A flight deck door viewing hole 92 provides for the flight personnel on the flight deck 110 to see into the cabin area 103 without opening the door 90.

The present application is directed to a barrier door system, for example barrier door system 10 configured to delay and/or prevent a passenger in the cabin area 103 from moving through an opening 113 and gaining access to the flight deck 110. The barrier door system 10 includes a barrier door, for example barrier door 20 that can be deployed across the opening 113. The barrier door 20 functions to delay the movement of a person moving from the cabin area 103 towards the flight deck 110.

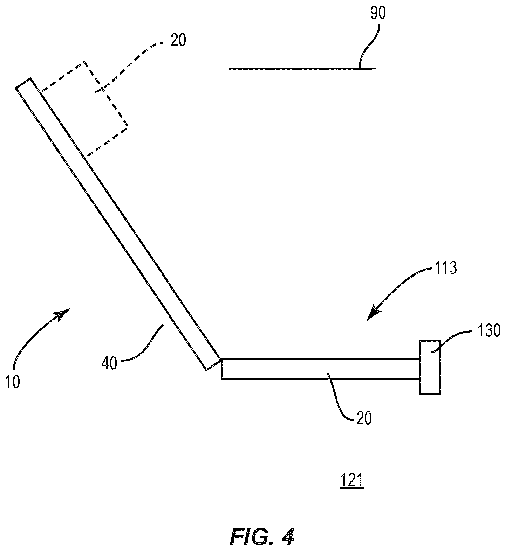

Figure 4 schematically illustrates an example barrier door system 10 that includes an example barrier door 20 that is movable along a track 40 between a stowed position (shown in dashed lines in Figure 4) and a deployed position shown in solid lines. In the stowed position, the barrier door 20 is positioned away from the opening 113. In the deployed position, the barrier door 20 is positioned across the opening 113. In some examples, the barrier door 20 can be arranged in a folded configuration to have a smaller overall size to facilitate storage when in the stowed position. The barrier door 20 can also be arranged in an extended configuration at the deployed position to extend across the opening 113. The barrier door 20 can be configured to engage with a mount 130 positioned on an opposing side of the opening 113. In other examples, the barrier door 20 has the same configuration in both the stowed and deployed positions. The track 40 is mounted to the structure of the aircraft 100 and extends between the stowed position and the deployed position. The track 40 can be mounted to various structures including but not limited to the ceiling 108, monuments 112, and walls 114.

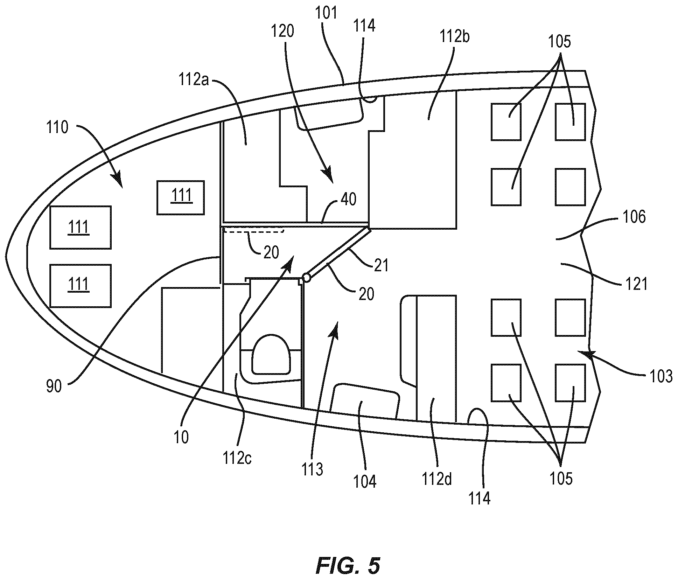

The aircraft 100 is configured for the barrier door 20 to be deployed across one or more openings 113. Figure 2 illustrates an example in which the track 40 extends along a forward section of the cabin area 103 at the vestibule 120. The barrier door 20 is movable between a stowed position in proximity to the flight deck door 90 and a deployed position (shown in dashed line in Figure 2) across an opening 113b formed between monuments 112b, 112d. Figure 5 illustrates an example with the door 20 in the deployed position extending across an opening 113 formed between monuments 112b, 112c, the barrier door in Figure 5 being movable between the deployed position and a stowed position (shown in dashed line in Figure 5) in proximity to the flight deck door 90. In some examples, the barrier door 20 is configured to simultaneously extend across two or more openings 113 in the extended configuration.

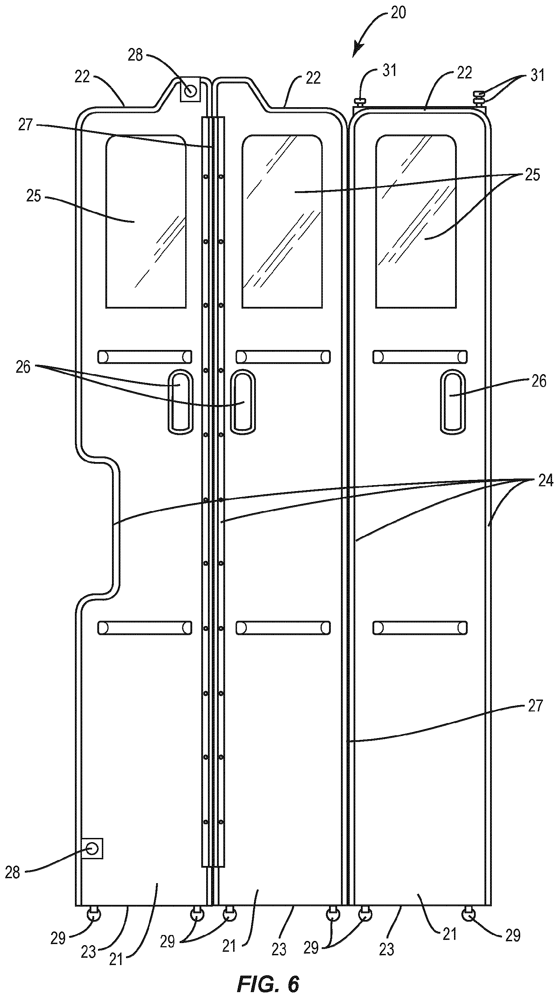

Figure 6 illustrates an example barrier door 20 in an extended configuration. The barrier door 20 includes panels 21 that are pivotally connected together to move between the stowed and deployed positions. The panels 21 include a top edge 22, bottom edge 23, and lateral edges 24. The size and shape of the panels 21 can vary to conform to the shape of the opening 113. The different panels 21 can include the same or different shapes and/or sizes. The panels 21 can be constructed from a variety of different materials. In some examples, the panels 21 are constructed from rigid, planar members constructed from various materials including but not limited to plastic and aluminum. In some examples, the panels 21 include a frame constructed from rigid elongated members and a fabric curtain that is attached to the elongated members.

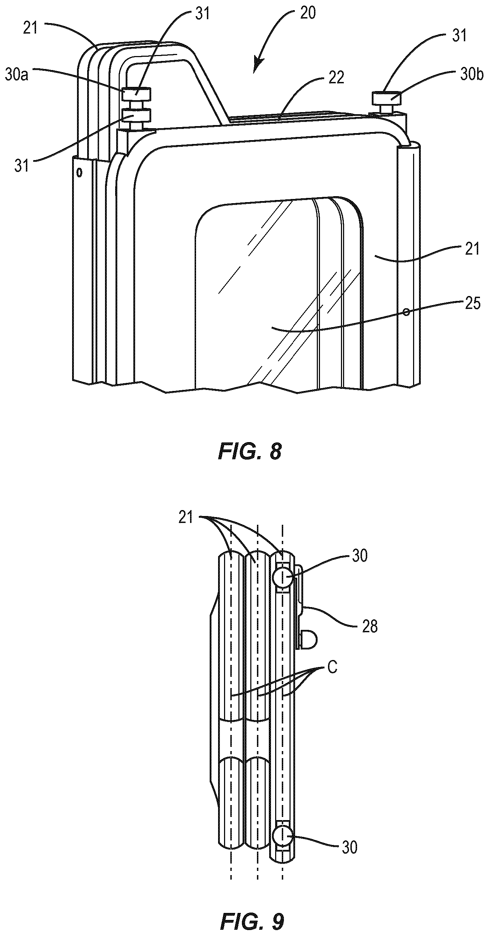

Windows 25 can be positioned in one or more of the panels 21. In some examples, the windows 25 include a transparent sheet such as plexiglass. In other examples, the windows 25 are open. Handles 26 may be included in one or more of the panels 21 to move the barrier door 20 between the folded and extended configurations and between the stowed and deployed positions. In some examples, the handles 26 include openings that extend through a central section of the panel 21 or include a cut out along a side of the panel 21. This provides for the faces of the panels 21 to abut together, flat flush against each other, when folded in the stowed position (see Figure 9). In other examples, the handles 26 are attached to and extend outward from one or more sides of the panels 21. In some example multiple-panel barrier doors 20, one or more hinges 27 provide for the pivoting movement of the panels 21. In some examples, the pivoting movement of the panels is provided for example by hinge-less fold lines.

In some examples, one or more locks 28 provide for securing the barrier door 20 in the extended configuration. In some examples, the locks 28 are accessible from just a front side of the barrier door 20 (i.e., the side that faces towards the flight deck 110 when in the deployed position). This positioning provides access to the locks 28 by flight personnel and prevents access by a passenger coming from the passenger section 121. The locks 28 are configured to engage with one or more of a monument 112, floor 107, ceiling 108, or other aircraft structure to secure the deployed position. In some examples, the locks 28 includes a hook that is rotatable between locked and unlocked positions, and a dial that is turned by the flight personnel to adjust the positioning. In another example, the locks 28 include a plunger that extends outward from the panel 21 to engage with a receptacle in the monument 112. In another example, the locks 28 include an elongated members such as a chain, cable, wire that connects to a clasp.

Wheels 29 may be mounted to one or more of the panels 21 at the bottom edges 23. The wheels 29 are configured to provide for movement of the barrier door 20 along the floor 107 of the cabin area 103. In some examples, the wheels 29 are pivotally mounted to provide for the various movements between the folded and extended configurations and translation along the track 40. In some examples, the barrier door 20 is mounted to the aircraft 100 just through pins 30 that engage with the track 40. In some examples the barrier door 20 is not mounted to the floor 107, but rather contacts the floor 107 through the wheels 29. In some examples, the barrier door is wheelless. In some examples, the door hangs from the track without being in contact with the floor. In some examples, the door is wheelless and slides on the floor.

The barrier door 20 is engaged with the track 40 through one or more pins 30. The pins 30 extend outward from the top edge 22 or bottom edge 23 of one or more of the panels 21. In one example, pins 30 extend outward from a same panel 21. In other examples, pins 30 extend outward from multiple panels 21.

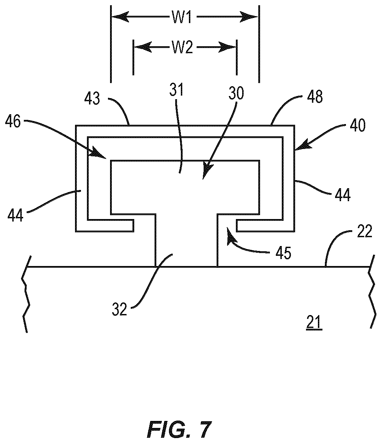

Figure 7 illustrates a schematic diagram of an example pin 30 extending outward from the top edge 22 of a panel 21. The pin 30 includes a head 31 and a neck 32. The head 31 includes an enlarged width W1 that is larger than the width of the neck 32 and larger than a width W2 of an opening 45 in the track body 48. This maintains the head 31 in the track 40 when translating along the track 40. In some examples with multiple pins 30, each of the pins 30 has the same shape and size. In other examples as illustrated in Figure 8, two or more of the pins 30 have different shapes and/or sizes. This provides for one or more of the pins 30 to remain within the track 40 and for one or more other pins 30 to leave the track 40 when the barrier door 20 is being deployed. Figure 8 includes pin 30a having two heads 31 and a longer length than pin 30b that includes a single head 31, whereby pin 30a , may remain within the track 40 while pin 30b may leave such track at some point during the translating.

The track 40 provides for translating the barrier door 20 between the stowed and deployed positions. As illustrated in Figure 3, the track 40 for example includes an elongated length with a first end 41 positioned in proximity to the stowed position and a second end 42 positioned in proximity to the deployed position. In some examples, the first and second ends 41, 42 are capped to prevent the pins 30, or some of the pins, from escaping from the interior of the track 40.

The track 40 is shaped to provide for the pins 30 to be engaged and to translate along the length or along at least part of the length. As illustrated in Figures 3 and 7, the track 40 may include a track body 48 that is formed by one or more pieces. The track body 48 includes a top side 43 configured to mount to aircraft 100, such as to the ceiling 108. The track body 48 also includes opposing lateral sides with distal ends that are spaced apart to form an opening 45. The opening 45 forms a slot that extends along the length of the track 40. The track body 48 extends around an interior space 46 sized to hold the head 31 of the pin 30. The opening 45 includes width W2 that is smaller than the width W1 of the head 31 to prevent the head 31 from escaping through the opening 45.

As illustrated in Figure 3, a notch 47 extends through a lateral side 44 and is in communication with the interior space 46. The notch 47 has a width that is greater than the width W1 of the head 31. This provides for the pin 30 to move through the notch 47 and exit the interior space 46 when the barrier door 20 is being deployed to the extended configuration. The notch 47 is in this example in proximity to the second end 42 and spaced away from the first end 41. Other notch locations may be considered.

As illustrated in Figures 3 and 7, a barrier door system may be provided to control movement of persons through an opening within a cabin area of an aircraft, the barrier door system comprising:
- a track 40 comprising an interior space 46 positioned within a body 48; and
- a barrier door 20 mounted to the track 40, the barrier door 20 comprising:
   a first panel 21;
   one or more additional panels 21 connected to the first panel 21;
   a first pin 30 and a second pin 30 that extend outward from a top edge 22 of the first panel 21, the first pin 30 and the second pin 30 sized to fit within the interior space 46 of the track 40;
   wherein the barrier door 20 is configured to move along the track 40 and configurable between a folded configuration and an extended configuration;
   wherein the folded configuration comprises both the first pin 30 and the second pin 30 positioned within the interior space 46 and the first panel 21 and the one or more additional panels 21 folded together; and
   wherein the extended configuration comprises the first pin 30 positioned within the interior space 46 and the second pin 30 positioned out of the interior space 46 and away from the track 40 with the barrier door 20 pivoted relative to the track 40 and with the first panel 21 and the one or more additional panels 21 being unfolded to extend across the opening.

As illustrated in Figures 3 and 7, the first pin 30 may comprise a greater length than the second pin 30 and extends outward from the top edge 22 of the first panel 21 a greater distance than the second pin 30. As illustrated in Figures 3 and 7, the first panel 21 and the one or more additional panels 21 may be pivotally connected together and are in an overlapping arrangement in the folded configuration and are in an end-to-end arrangement in the extended configuration. As illustrated in Figures 3 and 7, a notch 47 may be provided that extends through the body 48 of the track 40, the notch 47 comprising a greater width than the second pin 30 for the second pin 30 to move through the notch 47 when moving the barrier door 20 from the folded configuration to the extended configuration. As illustrated in Figures 3 and 7, the body 48 of the track 40 may comprise:
a top side 43;
a first lateral side 44 and a second lateral side 44 that are spaced apart and that extend from the top side 43;
an opening 45 formed between distal ends of the first lateral side 44 and the second lateral side 44, wherein the notch 47 extends through the first lateral side 44.

As illustrated in Figures 3 and 7, the first pin 30 and the second pin 30 may each comprise a neck 32 that extends outward from the top edge 22 of the first panel 21 and a head 31 positioned at an end of the neck 32 with the head 31 comprising a greater width than the neck 32.

As illustrated in Figures 3 and 7, the barrier door system may comprise wheels 29 positioned along a bottom edge 23 of the barrier door 20.

While not illustrated in Figures 3 and 7, the barrier door system may comprise a lock such as lock 28 positioned on the barrier door 20, the lock being exposed on just a front side of the barrier door 20.

The barrier door 20 may be selectively positionable along the track 40 between the stowed position and the deployed position. In some examples, the stowed position is away from the opening 113. In one example as illustrated in Figures 2 and 3, the stowed position is in proximity to the flight deck 110. In one specific example, the stowed position is in the space directly outside of the flight deck door 90. In other examples, the stowed position is located in other places, such as but not limited to within a galley, within an opening in a monument 112, and along a side of one or more seats 105 in the passenger section 121. The stowed position may provide for the opening 113 to be clear to allow for movement of persons on the aircraft 100.

In some examples as illustrated in Figures 8 and 9, the barrier door 20 is in a folded configuration when stowed. The folded configuration includes the panels 21 folded together for the barrier door 20 to have a reduced size to further prevent interference with persons in the cabin area 103. In one example, the folded configuration includes the faces of the panels 21 contacting together. In one example as illustrated in Figure 9, the panels 21 each have a centerline C that extends through the lateral edges 24. The centerlines C are arranged in a parallel configuration in the folded configuration. In some examples, the centerlines C of the panels 21 are aligned parallel to a centerline of the track 40 in the folded configuration.

The deployed position locates the barrier door 20 in proximity to the opening 113. In some examples, the deployed position is within the opening 113. In other examples, the deployed position is away from the opening 113 but in close enough proximity for the barrier door 20 to extend across the opening in the extended configuration.

In some examples, the barrier door 20 is extended by the panels 21 being unfolded by pivoting about the hinges 27 to an elongated shape. In some examples, the panels 21 are aligned in an end-to-end arrangement with the lateral edges 24 aligned and the centerlines C in a straight line. The barrier door 20 has a length measured between the outer lateral edge of the first panel 21 and the outer lateral edge of the last panel 21 to extend from the track 40 across the opening 113.

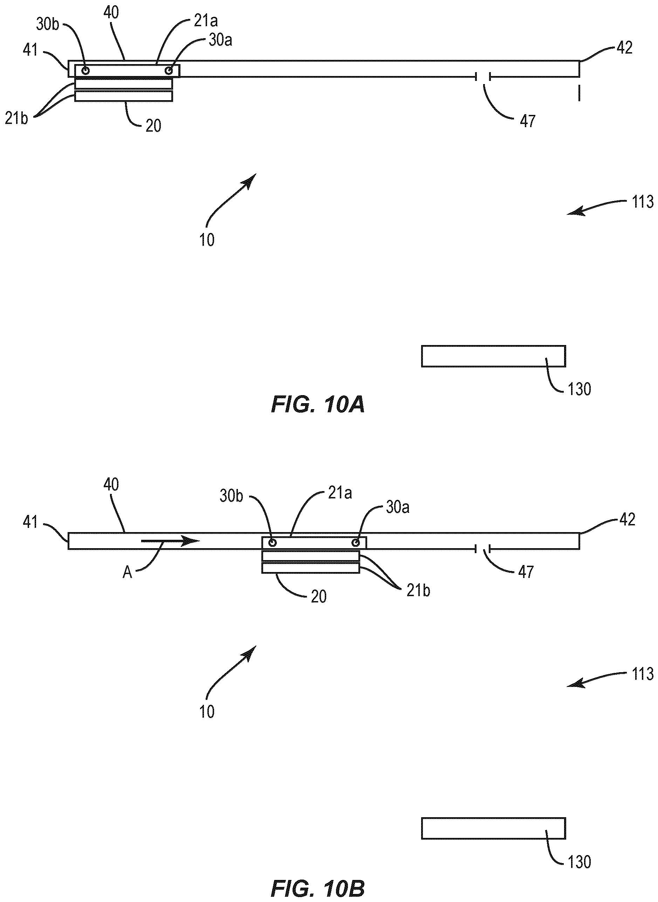

Figures 10A-10E illustrate deploying an example barrier door 20. As illustrated in Figure 10A, the barrier door 20 is located at the stowed position along the track 40. This positions the barrier door 20 away from the opening 113 to prevent interfering with persons that are moving through the opening 113. Pins 30a, 30b on the first panel 21a are engaged in the track 40. The other panels 21b are hingedly connected to the first panel 21a but not otherwise engaged with the track 40. The barrier door 20 is in a folded configuration to reduce the overall size to further prevent interfering with persons in the area and those moving through the opening 113.

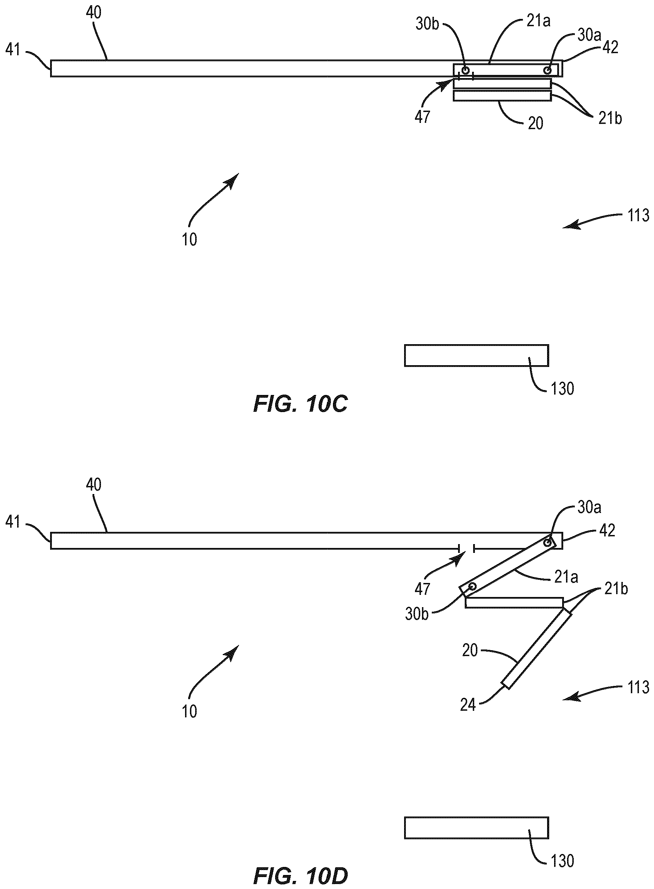

For deployment, the barrier door 20 is moved in the direction of arrow A along the track 40 as illustrated in Figure 10B. This includes the first panel 21a sliding along the track 40 with the heads of the pins 30a, 30b sliding along the interior space. The barrier door 20 is moved along the track 40 to the deployed position as illustrated in Figure 10C. In some examples, this includes the pin 30a contacting against an endcap mounted to the second end 42 of the track 40. The pins 30a, 30b remain engaged with the track 40 with pin 30b aligned with the notch 47.

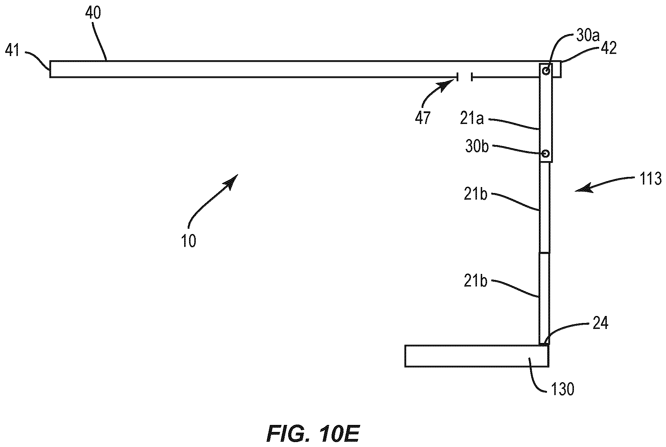

Figure 10D illustrates the barrier door 20 being moved towards the extended configuration. This movement includes the first panel 21a pivoting about pin 30a. This pivoting movement causes pin 30b to move through the notch 47 to disengage the pin 30b from the track 40. The other panels 21b are unfolded to lengthen the overall length of the barrier door 20. As illustrated in Figure 10E, the barrier door 20 is in the extended configuration to extend across the opening 113. An outer lateral edge 24 of the outer panel 21b is positioned at amount 130 that forms the side of the opening 113. In some examples, the barrier door 20 is locked to the mount 130 in the extended configuration to maintain the position. In some examples as illustrated in Figure 10E, the panels 21a, 21b are aligned in an end-to-end arrangement in a straight line. In some examples, centerlines C of the panels 21a, 21b are colinearly aligned. In other examples, the panels 21a, 21b are aligned in a non-parallel arrangement in the extended configuration. In some examples, the barrier door 20 is pivoted relative to the track 40 and is perpendicular to the track 40 in the extended configuration.

The barrier door 20 is returned to the stowed position in a reverse order. The panels 21a, 21b are folded back together and the pin 30b of panel 21a is moved through the notch 47 and back into the interior space 46. The panels 21a, 21b are then translated along the track 40 to the stowed position.

In some examples, the barrier door 20 is in the folded configuration when moving along the track 40 between the stowed position and the deployed position. In other examples, the barrier door 20 is partially or fully extended when moving along the track 40.

In some examples as illustrated in Figures 10A-10E, the barrier door 20 extends across a single opening 113 at the deployed position. In other examples, the barrier door 20 is sized to extend across two or more openings 113.

The barrier door 20 can include various numbers of panels 21. In some examples, a method of controlling movement of passengers according to this disclosure comprises operating a barrier door 20 which includes a single panel 20. In other examples, the barrier door 20 includes two or more panels 21. In multi-panel barrier doors 20, the different panels 21 can includes the same or different shape and size.

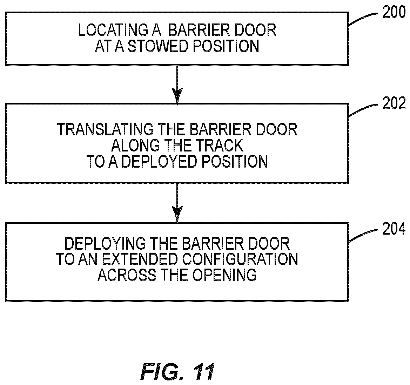

Figure 11 illustrates an example of a method of controlling movement of passengers through an opening 113 within a cabin area 103 of an aircraft 100. The method includes locating a barrier door such as any of the barrier doors hereby described, for example barrier door 20 that is mounted to a track 40 at a stowed position along the track 40 (block 200). The stowed position is away from the opening 113 and the barrier door 20 is in a folded configuration. The barrier door 20 is translated along the track 40 away from the stowed position to a deployed position while the barrier door 20 remains engaged with the track 40 (block 202). After moving the barrier door 20 to the deployed position, the barrier door 20 is pivoted relative to the track 40 (block 204). The barrier door 20 is moved to an extended configuration that extends across the opening 113.

The present invention may be carried out in other ways than those specifically set forth herein without departing from essential characteristics of the invention. The present embodiments are to be considered in all respects as illustrative and not restrictive, and all changes coming within the meaning and equivalency range of the appended claims are intended to be embraced therein.

## Claims

1. A barrier door system to control movement of persons through an opening within a cabin area of an aircraft, the barrier door system comprising:
a track (40) with an elongated shape comprising a first end (41) configured to be located away from the opening and a second end (42) configured to be located in proximity to the opening;
a barrier door (20) comprising:
a plurality of panels (21) that are pivotally connected together;
one or more pins (30) that extend outward from a top edge (22) of the barrier door (20)
and are configured to engage with the track (40);
wherein the plurality of panels (21) are configured to pivot together in a folded configuration at a stowed position; and
wherein the plurality of panels (21) are configured to pivot outward away from the track (40) in an extended configuration to extend across the opening at a deployed position.

2. The barrier door system of claim 1, wherein the one or more pins (30) extend outward from a same one of the plurality of panels (21).

3. The barrier door system of any of the above claims, wherein the track (40) comprises:
a top side (43);
a first lateral side (44) and a second lateral side (44) that are spaced apart and extend from the top side (43);
an opening (45) formed between distal ends of the first lateral side (44) and the second lateral side (44); and
wherein the opening (45) comprises a first width and the one or more pins (30) comprise a second width with the second width being greater than the first width to maintain the one or more pins (30) engaged to the track (40) when moving between the stowed position and the deployed position.

4. The barrier door system of claim 3, further comprising a notch (47) positioned in the first lateral side (44) of the track (40) and in closer proximity to the second end (42) than to the first end (41), the notch (47) having a width that is greater than the second width for one of the pins (30) to move through when moving the barrier door (20) from the folded configuration to the extended configuration.

5. The barrier door system of any of the above claims, wherein the plurality of panels (21) are aligned parallel to one another in the folded configuration.

6. The barrier door system of any of the above claims, further comprising a lock (28) positioned on a forward side of the barrier door (20) and away from a rear side of the barrier door (20), the lock (28) configured to maintain the barrier door (20) in the extended configuration.

7. The barrier door system of any of the above claims, further comprising wheels (29) mounted to the barrier door (20) and that extend outward from a bottom edge (23) of the barrier door (20).

8. The barrier door system of any of the above claims, whereby:
the track (40) comprises an interior space (46) positioned within a body (48);
the barrier door (20) comprises a first panel (21a) of the plurality of panels and one or more additional panels (21b) of the plurality of panels;
the one or more pin comprise a first pin (30a) and a second pin (30b), whereby the first pin (30a) and the second pin (30b) are sized to fit within the interior space (46) of the track (40);
the barrier door 20 is configured to move along the track 40 and configurable between the folded configuration and the extended configuration;
wherein the folded configuration comprises both the first pin (30a) and the second pin (30b) positioned within the interior space (46) and the first panel (21a) and the one or more additional panels (21b) folded together; and
wherein the extended configuration comprises the first pin (30a) positioned within the interior space (46) and the second pin (30b) positioned out of the interior space (46) and away from the track (40) with the barrier door (20) pivoted relative to the track (40) and with the first panel (21a) and the one or more additional panels (21b) being unfolded to extend across the opening.

9. The barrier door system of claim 8, wherein the first pin (30a) comprises a greater length than the second pin (30b) and extends outward from the top edge (22) of the first panel (21a) a greater distance than the second pin (30b).

10. The barrier door system of any of claims 8 or 9, wherein the first panel (21a) and the one or more additional panels (21b) are pivotally connected together and are in an overlapping arrangement in the folded configuration and are in an end-to-end arrangement in the extended configuration.

11. A method of controlling movement of passengers through an opening within a cabin area of an aircraft, the method comprising:
locating (200) a barrier door (20) that is mounted to a track (40) at a stowed position along the track (40) that is away from the opening with the barrier door (20) in a folded configuration;
translating (202) the barrier door (20) along the track (40) away from the stowed position to a deployed position while the barrier door (20) remains engaged with the track (40); and
after moving the barrier door (20) to the deployed position, pivoting the barrier door (20) relative to the track (40) and extending the barrier door (20) to an extended configuration and extending (204) the barrier door (20) across the opening.

12. The method of claim 11, further comprising pivoting a first panel (21a) of the barrier door (20) relative to the track (40) and moving a second pin (30b) that extends outward from the first panel (21a) through a notch (47) in the track (40) while maintaining a first pin (30a) that extends from the first panel (21a) engaged with the track (40).

13. The method of any of claims 11 or 12, further comprising pivoting the barrier door (20) to the extended configuration across the opening and aligning the barrier door (20) perpendicular to the track (40).

14. The method of any of claims 11 to 13, further comprising sliding the barrier door (20) from a first end (41) of the track (40) at the stowed position to a second end (42) of the track (40) at the deployed position.

15. The method of any of claims 11 to 14, further comprising sliding the barrier door (20) from the stowed position that is in proximity to a flight deck (110) to the deployed position at a front of a passenger section (121) of the cabin area (103).
